# FASCICULE DE BREVET EUROPEEN

(11) **EP 1 799 598 B1**
(45) Date de publication et mention de la délivrance du brevet: **02.09.2009**
(21) Numéro de dépôt: 05804307.6
(22) Date de dépôt: 27.09.2005
(51) Int. Cl.: B65G 39/12, B65G 21/06

(54) **STATION DE SUPPORT D'UNE BANDE DE CONVOYAGE ET TRANSPORTEUR LA COMPORTANT**
STÜTZSTATION FÜR EIN FÖRDERBAND UND DIESES ENTHALTENDE TRANSPORTEINRICHTUNG
SUPPORT STATION OF CONVEYOR BELT AND TRANSPORTER COMPRISING SAME

(30) Priorité: 06.10.2004 FR 0410546
(43) Date de publication de la demande: 27.06.2007
(73) Titulaire: Brunone, René, 27950 Saint Marcel (FR)
(72) Inventeur: Brunone, René, 27950 Saint Marcel (FR)
(74) Mandataire: Blot, Philippe Robert Emile
(86) Numéro de dépôt international: PCT/FR2005/002393
(87) Numéro de publication internationale: WO 2006/037873

(56) Documents cités:
- DE-A1- 2 800 728

## Description

La présente invention concerne une station de support d'une bande de convoyeur, du type comportant un socle d'appui sur le sol et un berceau de guidage de la bande supporté par le socle.

Pour le transport des granulats issus de mines ou de carrières, ou encore pour le transport de denrées alimentaires, notamment de céréales ou tout autre produit en vrac, il est connu d'utiliser des convoyeurs à bande qui sont constitués d'un ensemble de stations de support posées sur le sol et réparties suivant la longueur du convoyeur. Une bande refermée en boucle est supportée par ces stations. La bande se déplace sur les stations en circuit fermé en étant maintenue à ses deux extrémités par deux rouleaux de retournement. Les stations de support sont réparties sur un tronçon aller de transport et sur un tronçon de retour de la bande, ces deux tronçons s'étendant généralement parallèlement l'un à l'autre.

Pour les transporteurs implantés de manière temporaire, ou qui doivent être déplacés, il est connu que les stations de support soient constituées d'un socle propre à prendre appui sur le sol et d'un berceau de support de la bande reposant sur le socle et présentant une forme générale d'auge. Le berceau comporte par exemple un ou plusieurs rouleaux de guidage et de support de la bande.

Afin de réduire le coût des stations de support, le socle et le berceau de support sont généralement constitués de tubes métalliques soudés les uns aux autres.

De tels berceaux sont relativement légers et doivent donc être immobilisés par rapport au sol afin d'éviter un déplacement du convoyeur lors de la circulation de la bande ou lors de conditions météorologiques difficiles. Ainsi, il est possible, par exemple, d'ancrer les stations de support à l'aide de tiges métalliques enfoncées dans le sol ou encore de lester les stations de support par des ballastes posés sur le socle de chaque station.

Ces méthodes d'immobilisation des stations par rapport au sol sont consommatrices de temps et s'avèrent difficiles à mettre en oeuvre par les exploitants du transporteur. Ainsi, elles augmentent considérablement le coût d'exploitation du convoyeur, même si les stations sont initialement d'un prix modique.

DE- 28 00 728 décrit par ailleurs un transporteur conforme au préambule de la revendication 1.

L'invention a pour but de proposer un transporteur dont les stations de support peuvent être plus facilement déplacées.

A cet effet, l'invention a pour objet un transporteur conforme à la revendication 1.

Suivant des modes particuliers de réalisation, le transporteur comporte l'une ou plusieurs des caractéristiques figurant dans les revendications 2 à 6.

L'invention sera mieux comprise à la lecture de la description qui va suivre, donnée uniquement à titre d'exemple, et faite en se référant aux dessins, sur lesquels:

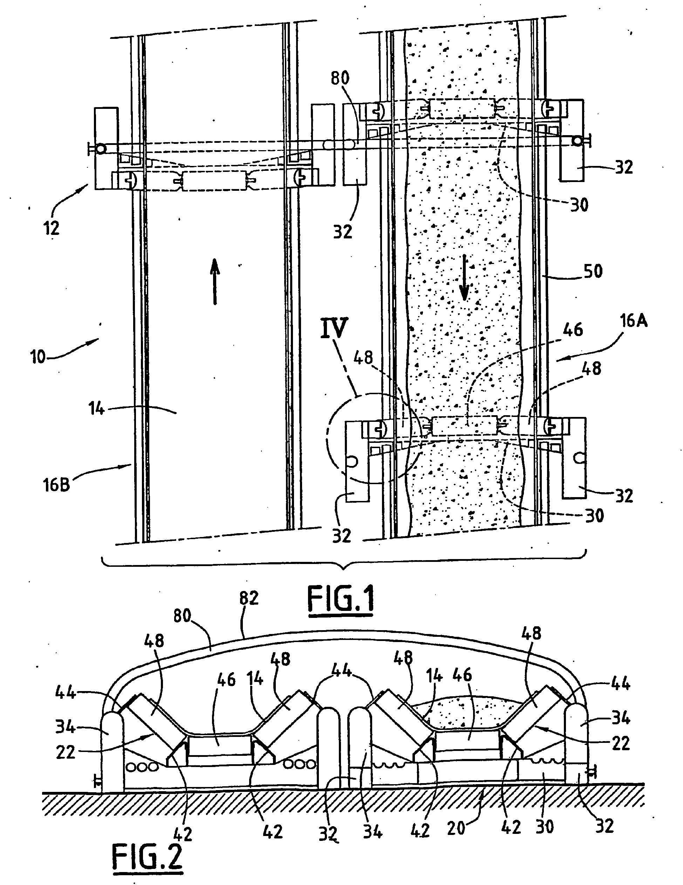

- la figure 1 est une vue partielle de dessus d'un convoyeur selon l'invention ;
- la figure 2 est une vue en section transversale du convoyeur de la figure 1 ;
- la figure 3 est une vue partielle de côté du convoyeur de la figure 1 ; et
- la figure 4 est une vue de dessus d'un détail de la figure 1.

Le convoyeur 10 illustré aux figures comporte un ensemble de stations de support 12 et une bande transporteuse 14 circulant sur les stations de support 12. Cette bande est refermée en boucle sur elle-même et est maintenue entre deux rouleaux d'extrémité non représentés, comme connu en soi. L'un des rouleaux est motorisé pour assurer une circulation de la bande sur les rouleaux suivant un tronçon de transport 16A et un tronçon de retour 16B où la bande circule en des sens opposés.

Les stations de support sont disposées à la suite les unes des autres suivant chaque tronçon du convoyeur. Les stations sont toutes identiques. Elles sont espacées d'un intervalle compris entre 500 cm et 3000 cm pour le tronçon de transport et sont espacées d'un intervalle plus important compris entre 1500 cm et 9000 cm sur le tronçon de retour 16B. Des produits peuvent également être véhiculés par la bande sur le tronçon de retour.

Les stations de support sont posées directement sur le sol sans y être ancrées, par exemple sur une dalle en béton.

Chaque station de support comporte un socle 20 propre à reposer sur le sol et un berceau 22 de guidage de la bande porté par ce socle.

Selon l'invention, le socle 20 est formé d'au moins une poutre réalisée en béton supportant le berceau de guidage de la bande.

Plus précisément, dans le mode de réalisation décrit aux figures, le socle 20 comporte une poutre principale transversale 30 prolongée, à chaque extrémité, par deux bras 32 d'appui sur le sol s'étendant d'un même côté de la poutre 30 et disposés chacun perpendiculairement à cette poutre. La longueur des bras est comprise entre le quart et la moitié de la longueur de la poutre principale. La poutre a une longueur comprise entre 1 m et 2 m.

En outre, le socle 20 comporte deux colonnes 34 réalisées également en béton s'étendant perpendiculairement au plan délimité par la poutre principale et les deux bras 32. Ces colonnes 34 s'étendent parallèlement l'une à l'autre et ont une longueur sensiblement égale à celle des bras d'appui 32.

Le poids total du socle est compris de préférence entre 20 kg et 200 kg.

Le berceau de guidage 22 comprend un ensemble de pattes de support des rouleaux qui sont formés de plaques métalliques dont une extrémité au moins est scellée dans le béton constituant le socle. Ainsi, par exemple, deux pattes intermédiaires 42 sont scellées dans la poutre principale 30 et des pattes d'extrémité 44 sont scellées au sommet des colonnes 34. Un rouleau inférieur 46, généralement horizontal, et deux rouleaux latéraux inclinés 48 sont montés mobiles en rotation entre les pattes de support. Ces rouleaux s'étendent dans un même plan généralement vertical et sont propres à recevoir la bande et à déformer celle-ci pour lui conférer une forme d'auge.

Par ailleurs, afin d'assurer un positionnement correct des stations successives les unes par rapport aux autres, le convoyeur comporte des entretoises 50 formées de tubes métalliques rectilignes de longueur prédéterminée. Ces tubes sont chacun engagés à une extrémité dans un trou borgne ménagé dans l'épaisseur du socle et s'ouvrant latéralement.

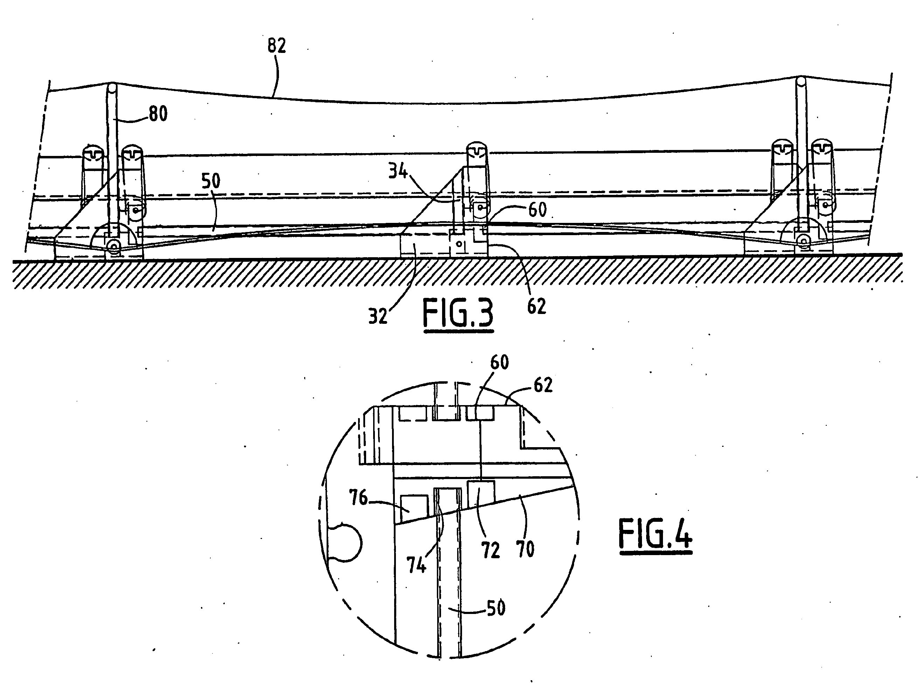

Plus précisément, chaque socle comporte, de chaque côté de son axe longitudinal médian, et comme illustré sur la figure 4, trois trous borgnes 60 de même profondeur débouchant suivant une face plane avant de la poutre du socle 62.

Suivant sa face arrière 70 opposée à la face avant, chaque poutre principale 30 comporte, de chaque côté de l'axe longitudinal médian, trois trous borgnes alignés 72, 74, 76 dans un plan horizontal. Les fonds des trous 72, 74, 76 sont situés à des niveaux différents suivant l'axe longitudinal médian des stations de support.

Deux entretoises 50 sont interposées entre chaque paire de stations successives, les extrémités des entretoises étant placées dans des trous borgnes en regard. Si les entretoises sont placées dans des trous oblongs d'un même socle dont les fonds s'étendent dans un même plan, les deux stations successives s'étendent rigoureusement parallèlement l'une, à l'autre. En revanche, si les extrémités des entretoises sont placées dans des trous d'un même socle dont les fonds s'étendent à des niveaux différents, les stations successives sont décalées angulairement l'une par rapport à l'autre d'un angle correspondant à l'inclinaison imposée par le décalage des positions des fonds des trous borgnes dans lesquels les entretoises sont introduites.

Enfin, le transporteur comporte avantageusement un toit constitué d'une succession d'arceaux 80 disposés transversalement et supportés par les stations, ainsi que d'une bâche 82 portée par ces arceaux 80.

De préférence, chaque socle 20 comporte un trou ménagé dans la partie médiane de chaque bras d'appui 32, de manière à permettre l'emboîtement des extrémités des arceaux.

Ces arceaux enchâssent simultanément le tronçon de transport et le brin de retour du convoyeur.

On conçoit qu'avec un tel convoyeur, chaque station est réalisée très facilement grâce à l'injection de béton dans un moule et scellement simultané des pattes propres à retenir les rouleaux de support.

Les poutures sont dimensionnées de sorte que le poids total du socle soit suffisant pour permettre une immobilisation de la station du seul fait de son poids lorsque celle-ci est posée sur le sol.

Le coût du béton étant très réduit, le coût global de chaque station est faible.

Dans la mesure où aucun moyen particulier n'est mis en oeuvre pour assurer la solidarisation des stations de support au sol, l'exploitation d'un tel convoyeur est d'un coût très réduit puisque les stations peuvent être déplacées facilement sans qu'il soit nécessaire de retirer des lests ou des ancrages dans le sol.

Par ailleurs, la mise en oeuvre d'entretoises, ayant toutes la même longueur et positionnées dans des trous borgnes dont les fonds sont à des positions distinctes, permet un positionnement angulaire très simple des stations les unes par rapport aux autres.

## Revendications

1. Transporteur comportant un ensemble de stations de support (12) disposées successivement et une bande (14) de transport refermée en boucle, et propre à circuler sur les stations de support (12) suivant un tronçon de transport (16A) et un tronçon de retour (16B), les stations de support (12) comportant un socle (20) d'appui sur le sol et un berceau (22) de guidage de la bande (14) supporté par le socle, le socle (20) comportant au moins une poutre (30) en béton, **caractérisé en ce que** les stations de support (12) disposées suivant le tronçon de transport (16A) sont distinctes des stations de support (12) disposées suivant le tronçon de retour (16B).

2. Transporteur selon la revendication 1, **caractérisée en ce que** le socle (20) comporte une poutre transversale (30) en béton prolongée, à chaque extrémité, par deux bras latéraux (32) s'étendant généralement transversalement à la poutre principale.

3. Transporteur selon la revendication 1 ou 2, **caractérisée en ce que** le socle (20) comporte une poutre principale transversale (30) en béton prolongée à chaque extrémité par deux colonnes (34) en béton de support du berceau (22) de guidage de la bande.

4. Transporteur selon l'une quelconque des revendications précédentes, **caractérisée en ce que** le berceau (22) de guidage de la bande comporte des pattes (42, 44) scellées directement dans le béton du socle (20).

5. Transporteur selon l'une quelconque des revendications précédentes, **caractérisée en ce que** le socle (20) comporte latéralement de part et d'autre des ensembles de trous borgnes (72, 74, 76) débouchant latéralement et dont les fonds s'étendent à des niveaux différents suivant l'axe longitudinal de la station.

6. Transporteur selon la revendication 5, **caractérisé en ce qu'**il comporte des entretoises (50) interposées entre deux stations de support successives et propres à être engagées sélectivement dans l'un ou l'autre des trous borgnes dont les fonds s'étendent à des niveaux différents.

7. Transporteur selon l'une quelconque des revendications précédentes, **caractérisé en ce que** le tronçon de transport est juxtaposé latéralement au tronçon de retour.

## Claims

1. A conveyor comprising a set of support stations (12) disposed in succession and a conveyor belt (14) forming a closed loop and suitable for travelling over the support stations (12) along a conveyance section (16A) and a return section (16B), the support stations (12) comprising a base (20) for bearing against the ground and a cradle (22) for guiding the belt (14) and supported by the base, the base (20) comprising at least one concrete beam (30), **characterised in that** the support stations (12) disposed along the conveyance section (16A) are distinct from the support stations (12) arranged along the return section (16B), the conveyance sections being juxtaposed laterally to the return section.

2. The conveyor according to Claim 1, **characterised in that** the base (20) comprises a transverse concrete beam (30) extended at each end by two lateral arms (32) extending generally transversely to the main beam.

3. The conveyor according to Claim 1 or 2, **characterised in that** the base (20) comprises a transverse concrete main beam (30) extended at each end by two concrete columns (34) supporting the cradle (22) for guiding the belt.

4. The conveyor according to any of the preceding claims, **characterised in that** the cradle (22) for guiding the belt comprises legs (42, 44) fixed directly in the concrete of the base (20).

5. The conveyor according to any of the preceding claims, **characterised in that** the base (20) comprises laterally to either side sets of blind holes (72, 74, 76) opening out laterally and the ends of which extend to different levels along the longitudinal axis of the station.

6. The conveyor according to Claim 5, **characterised in that** it comprises struts (50) interposed between two successive support stations and suitable for being engaged selectively in one or other of the blind holes the ends of which extend to different levels.

7. The conveyor according to any of the preceding claims, **characterised in that** the conveyance section is juxtaposed laterally to the return section.

## Patentansprüche

1. Fördervorrichtung mit einer Gesamtheit von sukzessiv angeordneten Stützstationen (12) und einem schleifenförmig geschlossenen Förderband (14), das über die Stützstationen (12) läuft, entsprechend einem Transport- bzw. Obertrum (16A) und einem Retour- bzw. Untertrum (16B), wobei die Stützstationen (12) einen Sockel (20) zur Auflage auf dem Boden und eine durch den Sockel getragene Muldeneinrichtung (22) zur Führung des Bandes (14) umfassen und der Sockel (20) wenigstens einen Betonbalken (30) aufweist,
**dadurch gekennzeichnet, dass** die entsprechend dem Transport- bzw. Obertrum (16A) angeordneten Stützstationen (12) sich von den entsprechend dem Retour- bzw. Untertrum (16B) angeordneten Stützstationen (12) unterscheiden.

2. Fördervorrichtung nach Anspruch 1, **dadurch gekennzeichnet, dass** der Sockel (20) einen Beton-Querbalken (30) umfasst, der an jedem Ende verlängert wird durch zwei zum Hauptbalken generell quergerichtete Seitenarme (32).

3. Fördervorrichtung nach Anspruch 1 oder 2, **dadurch gekennzeichnet, dass** der Sockel (20) einen Hauptquerbalken (30) umfasst, der an jedem Ende verlängert wird durch zwei Beton-Stützsäulen (34) der Führungsmuldeneinrichtung (22) des Bandes.

4. Fördervorrichtung nach einem der vorangehenden Ansprüche, **dadurch gekennzeichnet, dass** die Führungsmuldeneinrichtung (22) des Bandes direkt in den Beton des Sockels (20) eingegossene Platten bzw. Lagerungsplatten (42, 44) umfassen.

5. Fördervorrichtung nach einem der vorangehenden Ansprüche, **dadurch gekennzeichnet, dass** der Sockel (20) auf beiden Seiten Gruppen von seitlich mündenden Sacklöchern (72, 74, 76) umfasst, die unterschiedlich tief sind gemäß der Längsachse der Station.

6. Fördervorrichtung nach Anspruch 5, **dadurch gekennzeichnet, dass** sie zwischen zwei sukzessiven Stützstationen eingesetzte Abstandshalter (50) umfassen, die selektiv in jeweils das eine oder das andere der unterschiedlich tiefen Sacklöcher gesteckt werden können.

7. Fördervorrichtung nach einem der vorangehenden Ansprüche, **dadurch gekennzeichnet, dass** das Transport- bzw. Obertrum seitlich neben dem Retour- bzw. Untertrum angeordnet ist.
